Europäisches Patentamt

(19) European Patent Office

Office européen des brevets

(11) Publication number: **0 083 943**
**B1**

(12) **EUROPEAN PATENT SPECIFICATION**

(45) Date of publication of patent specification: **12.04.89**

(21) Application number: **83100172.2**

(22) Date of filing: **11.01.83**

(51) Int. Cl.⁴: **B 23 Q 11/12**

(54) Supporting table cooling apparatus.

(30) Priority: **11.01.82 JP 2626/82**

(43) Date of publication of application:
**20.07.83 Bulletin 83/29**

(45) Publication of the grant of the patent:
**12.04.89 Bulletin 89/15**

(84) Designated Contracting States:
**DE FR GB**

(56) References cited:
**EP-A-0 064 173**
**DE-A-2 724 440**
**DE-B-1 267 950**
**US-A-2 358 088**

(73) Proprietor: **Nakamuratome Seimitsu Kogyo
Kabushiki Kaisha
Ro-15, Netsuno-machi Tsurugi-machi
Ishikawa-gun Ishikawa (JP)**
(73) Proprietor: **MITSUBISHI DENKI KABUSHIKI
KAISHA
2-3, Marunouchi 2-chome Chiyoda-ku
Tokyo 100 (JP)**

(72) Inventor: **Souichi, Shibata Nakamuratome
Seimitsu Kogyo K.K.
Ro-15, Netsuno-machi Tsurugi-machi
Ishikawa-gun Ishikawa (JP)**
Inventor: **Inoue, Hitoshi Mitsubishi Denki K.K.
Kobe Works No. 1-2, Wadasaki-cho 1-chome
Hyogo-ku Kobe-shi Hyogo (JP)**
Inventor: **Katazawa, Kenji Mitsubishi Denki K.K.
Hokuriku Branch No. 1-29, Sakuragi-cho
Toyama-shi Toyama (JP)**

(74) Representative: **Lehn, Werner, Dipl.-Ing. et al
Hoffmann, Eitle & Partner Patentanwälte
Arabellastrasse 4
D-8000 München 81 (DE)**

Courier Press, Leamington Spa, England.

## Description

The present invention relates to support apparatus suitable for mounting a spindle of a machine tool, or the like.

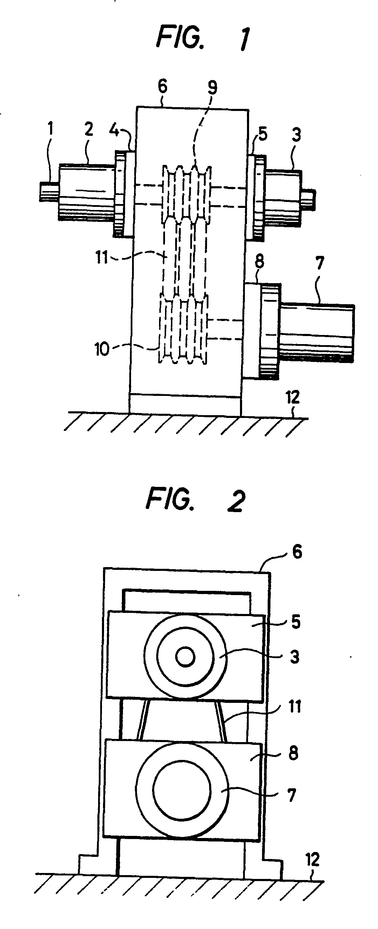

Conventional support apparatus of the kind mentioned above is shown in Figures 1 and 2, which are side and front views, respectively, of the spindle portion of a machine tool. The accompanying drawings illustrate a spindle 1 of a machine tool, front and rear bearing stands 2 and 3 for bearing the opposite ends of the spindle 1, bearing stand mounting plates 4 and 5 for supporting the spindle bearing stands 2 and 3 on a supporting table 6, a driving motor 7 supported on the supporting table 6 through a motor mounting plate 8, pulleys 9 and 10 provided respectively on the spindle 1 and the driving motor 7 and drivingly connected to each other by a belt 11. A bed 12 is provided for supporting the components as mentioned above.

The operation of the thus arranged conventional apparatus will now be described.

Cutting operation is achieved by rotation of the spindle 1. The rotation of the spindle 1 causes heat at a bearing (not shown) provided between the spindle 1 and the front bearing stand 2 thereby heating the front bearing stand 2 and the bearing stand mounting plate 4. The heat thus generated is conducted to the supporting table 6 thereby heating the same. Similarly, heat is generated also at the rear bearing stand 3 and conducted to the supporting table 6 through the rear bearing stand mounting plate 5 thereby heating the supporting table 6.

The spindle 1 is rotated by the rotary torque of the driving motor 7 through the pulley 10, the belt 11, and the pulley 9. At this time, the heat generated in the driving motor 7 is conducted to the supporting table 6 through the motor mounting plate 8 thus heating the suppporting table 6. Further, the friction losses generated at the pulley 9, the belt 11 and the pulley 10 cause heat which tends to warm the surrounding air which therefore rises up and the heat is partially conducted to the supporting table 6.

In the thus arranged conventional system, there is a drawback that the heat generated at various devices or components is conducted to the supporting table 6 to heat the same, resulting in thermal expansion and deformation of the supporting table 6 due to the increasing temperature of the same.

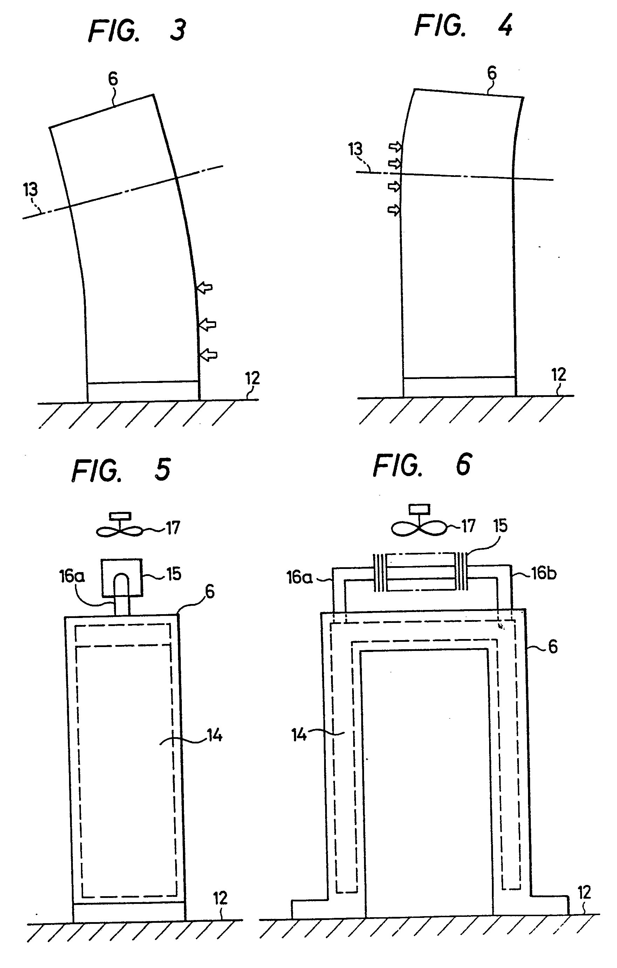

Figures 3 and 4 illustrate examples of the drawback as mentioned above. Each of Figures 3 and 4 illustrates the supporting table 6 as shown in side view of Figure 1, in which reference numeral 13 denotes a center line of the spindle 1 and arrows indicate portions at which heat is generated. The heat generated in the driving motor 7 heats the supporting table 6 at the portions indicated by the arrows in Figure 3. The supporting table 6 is deformed due to the local thermal expansion generated at the portions indicated by the arrows and the center line 13 is inclined, as shown in Figure 3.

In the same manner as above, the heat conducted from the front bearing stand 2 heats the supporting table 6 at the portions indicated by the arrows in Figure 4. The supporting table 6 is deformed due to the local thermal expansion generated at the portions indicated by the arrows and the center line 13 is inclined, as shown in Figure 4. Thus, there is a drawback that the center line 13 of the spindle 1 is inclined due to the local heating of the supporting table 6 and if machining is made by using the thus inclined spindle 1, the accuracy of finishing of the machined object is adversely affected.

Referring to Figures 3 and 4, the influence of the heat generated at the front bearing stand 2 and the driving motor 7 has been described above. However, the heat generated at the rear bearing stand 3, the pulleys 9 and 10, or the like other than the components as mentioned above may also affect the situation, resulting in similar drawback as mentioned above. Further, the surroundings, that is the existence of other heat source in the neighborhood, may cause generation of complicated displacement and inclination of the spindle to thereby cause a further drawback.

From GB—A—1 578 268 (DE—A—2 724 440) it is known to remove heat from a spindle of a machine tool by means of a heat pipe contained within the spindle. This document does not suggest how heat may be removed from support members supporting the spindle. No recognition of possible misalignment problems arising from localised heating of the support members is to be found in this disclosure, and certainly no solution to this problem.

Furthermore, US—A—2358088, discloses a machine tool and a system for controlling the temperature of those parts of the machine tool which are subject to changes during operation. This is achieved by the provision of passages, both internal and external to the relevant operative elements of the machine tool, through which a suitable cooling medium is made to circulate.

EP—A—0064173, citable only under Article 54(3) EPC, discloses a driving mechanism for a machine tool shaft having a bearing assembly provided with an internal cavity which is supplied with a two-phase cooling medium.

An object of the present invention is to provide a support apparatus in which local heating and thermal expansion are at least partially suppressed to reduce deformation of the support apparatus.

According to the invention there is provided a machine tool body structure for supporting a machining spindle and a driving means, the body structure consisting of wall members adapted for attachment of bearing assemblies for the spindle and for the driving means, at least one wall member comprising an internal cavity extending substantially coextensively with the outer surface of the wall, said cavity defining a sealed space containing a cooling fluid at a pressure such that two phases of the fluid are coexistent over a range of operating temperatures.

An embodiment of the invention will now be described by way of example with reference to the accompanying drawings, in which:

Figure 1 is a side view of a conventional apparatus;

Figure 2 is a front view of the conventional apparatus of Figure 1;

Figures 3 and 4 are side view of the conventional apparatus for briefly illustrating the drawback of the apparatus.

Figure 5 is a side view of an embodiment of the present invention; and

Figure 6 is a front view of the same embodiment.

In Figures 5 and 6, a hollow portion or cavity 14 is provided in the inside of a supporting table similar to the conventional one. A radiator 15 is provided and pipes 16a and 16b connect between the radiator 15 and the cavity 14. A cooling fan 17 is also provided. After the pressure has been reduced to form a vacuum in the inside of the cavity 14, the radiator 15 and the pipes 16a and 16b, a necessary quantity of working fluid such as fluon is sealed in the cavity 14.

As illustrated, the table 6a comprises three substantially rectangular members each providing a supporting surface. The cavity 14 extends within each member and is substantially coextensive with the supporting surface in each case.

In the thus arranged embodiment of the present invention, if a part or whole of the supporting table 6 is heated to increase the temperature thereof due to the heat generated by any apparatus or device in the neighborhood or due to ambient conditions, the working fluid is evaporated as as to take evaporation latent heat away from the heated portion so that the supporting table 16 is cooled. Then, the evaporated working medium is caused to reach the radiator 15 through the pipes 16a and 16b owing to the vapor pressure difference and cooled by the cooling fan 17 to be condensation-liquefied to recover liquid.

During the condensation-liquefaction, the latent heat is released and radiated into the surrounding atmosphere through the pipe wall of the radiator 15. The liquefied working fluid comes back to the cavity 14 of the supporting table 6 through the pipes 16a and 16b owing to gravity or capillarity due to the wick effect.

Thus, if the supporting table 6 is externally heated and its temperature increased, the heat is transferred to the outside of the supporting table 6 owing to the phase change of the working medium within the cavity 14 so as to suitably cool the supporting table 6. Although forced draft by the cooling fan 17 is employed in the above-described embodiment, a natural cooling system may be used without employing any cooling fan.

Further, the same effect can be obtained by using cooling water, oil, or coolant in place of the cooling air.

Further, alternatively, the same effect can be obtained by causing cooling air, cooling water, oil, or coolant or the like to pass through a part of the supporting table 6 without using the radiator 15. In this case, without providing any special cooling source, the same effect can be obtained by using the surrounding air as a cooling source and causing the air to achieve heat transfer and heat equalization between the heated portion and the surroundings.

Further, although the hollow is widely formed extending over the whole body of the supporting table 6 in the embodiment mentioned above, it is sufficient of course to form the cavity 14 only at a necessary part in the case where the heated portion is limited.

As aforementioned, according to the present invention, there are achieved useful effects for practical usage in that for example a hollow structure is formed in a part of or widely extending over the whole body of the supporting table of the spindle of a machine tool and working fluid such as fluon is sealed in the hollow structure so that the thermal expansion and deformation of the supporting table is suppressed to thereby prevent displacement and inclination of the spindle from occurring resulting in improvement in the accuracy of finishing.

## Claims

1. Machine tool body structure (6) for supporting a machining spindle and a driving means, the body structure consisting of wall members adapted for attachment of bearing assemblies (2, 3) for the spindle and for the driving means (7), at least one wall member comprising an internal cavity (14) extending substantially coextensively with the outer surface of the wall, said cavity defining a sealed space containing a cooling fluid at a pressure such that two phases of the fluid are coexistent over a range of operating temperatures.

2. Machine tool body structure according to claim 1, characterized in that a spindle (1) of a machine tool is supported by said structure.

3. Machine tool body structure according to claim 1 or 2 characterized in that said cavity (14) communicates with a radiator (15).

4. Machine tool body structure according to claim 3 characterized in that a fan (17) is provided for forced cooling of said radiator (15).

5. A machine tool characterized by a machine tool body structure according to any one of the preceding claims.

## Patentansprüche

1. Werkzeugmaschinengestellaufbau (6) zum Tragen einer Werkzeugspindel und einer Antriebseinrichtung, wobei der Gestellaufbau aus Wandelementen besteht, die für die Befestigung von Lagergruppen (2, 3) für die Spindel und die Antriebseinrichtung (7) vorbereitet sind, wobei zumindest ein Wandelement einen inneren Hohlraum (14) umfaßt, der sich im wesentlichen gleich verlaufend mit der äußeren Oberfläche der Wand erstreckt, wobei der Hohlraum einen versiegelten Raum festlegt, der eine Kühlflüssigkeit bei einem Druck derart enthält, daß zwei Phasen der Flüssigkeit über einen Bereich der Betriebstemperaturen gemeinsam vorliegen.

2. Werkzeugmaschinengestellaufbau nach Anspruch 1, dadurch gekennzeichnet, daß eine Spindle (1) einer Werkzeugmaschine durch den Aufbau getragen wird.

3. Werkzeugmaschinengestellaufbau nach Anspruch 1 oder 2, dadurch gekennzeichnet, daß der Hohlraum (14) mit einem Wärmetauscher (15) verbunden ist.

4. Werkzeugmaschinengestellaufbau nach Anspruch 3, dadurch gekennzeichnet, daß ein Lüfter (17) vorgesehen ist, um den Wärmetauscher (15) verstärkt zu kühlen.

5. Werkzeugmaschine gekennzeichnet durch einen Werkzeugmaschinengestellaufbau nach einem der vorhergehenden Ansprüche.

**Revendications**

1. Structure de corps de machine-outil (6) pour supporter une broche d'usinage et un moyen de commande, la structure de corps se composant d'éléments de paroi adaptés pour la fixation d'assemblages de support (2, 3) pour la broche et pour le moyen de commande (7), au moins un élément de paroi comprenant une cavité intérieure (14) s'étendant sensiblement sur la longueur de la surface extérieure de la paroi, ladite cavité définissant un espace hermétique contenant un fluide de refroidissement à une pression telle que deux phases du fluide sont coexistantes sur un dommaine de températures de service.

2. Structure de corps de machine-outil selon la revendication 1, caractérisée en ce qu'une broche (1) d'une machine-outil est supportée par ladite structure.

3. Structure de corps de machine-outil selon la revendication 1 ou 2, caractérisée en ce que ladite cavité (14) communique avec un radiateur (15).

4. Structure de corps de machine-outil selon la revendication 3 caractérisée en ce qu'un ventilateur (17) est prévu pour le refroidissement forcé dudit radiateur (15).

5. Une machine-outil caractérisée par une structure de corps de machine-outil selon l'une quelconque des précédentes revendications.

FIG. 1

FIG. 2

## FIG. 3

## FIG. 4

## FIG. 5

## FIG. 6